# EUROPEAN PATENT APPLICATION

(11) **EP 2 023 554 A2**
(43) Date of publication of application: **11.02.2009**
(21) Application number: 08018253.8
(22) Date of filing: 25.01.2006
(51) Int. Cl.: H04L 12/56

(54) **Methods for information transmission**

(30) Priority: 04.02.2005 CN 200510007314
(62) Divisional of application: 06705565.7
(71) Applicant: Huawei Technologies Co., Ltd., Longgang District, Shenzhen Guangdong 518129 (CN)
(72) Inventor: Ding, Yingzhe, Shenzhen 518129 Guangdong (CN)
(74) Representative: Manitz, Finsterwald & Partner GbR

(57) **Abstract**

A method for information transmission is disclosed such that, if the information of an SDU that needs to be processed with higher priority is received during information transmission, the processing of the information of the current SDU could be interrupted and the information of the SDU that needs to be processed with higher priority could be processed with higher priority. The invention simplifies the processing of information transmission, raises the efficiency of transmission, and improves the reliability and flexibility of information transmission as well as the overall system performance.

## Description

### Field of the invention

The present invention relates to techniques of information transmission, and more particularly, to methods for transferring the control information of Multimedia Broadcast/Multicast Service (MBMS).

### Background of the invention

In a mobile communication network, multicast and broadcast are techniques for transferring data from one source to multiple destinations. In a conventional mobile communications network, the cell multicast service or the Cell Broadcast Service (CBS) allows low bit-rate data to be transferred to all users via a shared broadcasting channel of a cell, which is categorized as the message type service.

At present, demand for mobile communications has gone beyond phone communications and message services. Along with the rapid development of the Internet, there is emerging a great deal of multimedia services, some applications of which require that multiple users be able to receive the same data at the same time, e.g. video on demand, telecast, video conference, network-based education, and interactive video games. Compared with ordinary data services, these multimedia services are featured with large data flow, long time duration, and high sensitivity to time delay. The existing techniques of IP multicast and broadcast are only applicable to cabled IP communication networks rather than mobile networks, for mobile communication networks have special network architectures, functions, and wireless interfaces, which are all different from those of a cabled IP network.

In order to make an efficient use of resources of a mobile communication network, the 3^{rd} generation mobile communications global standardization organization (3GPP) has put forward the MBMS for mobile communication networks, thereby providing point-to-multipoint services of transferring data from one source to multiple users in a mobile network so as to share network resources and improve the utility rate thereof, especially the utility rate of resources of idle interface. MBMS defined by 3GPP can implement not only low-rate text multicast and broadcast of messages, but also multicast and broadcast of high-rate multimedia services, which is no doubt the trend of future development of mobile data transmission.

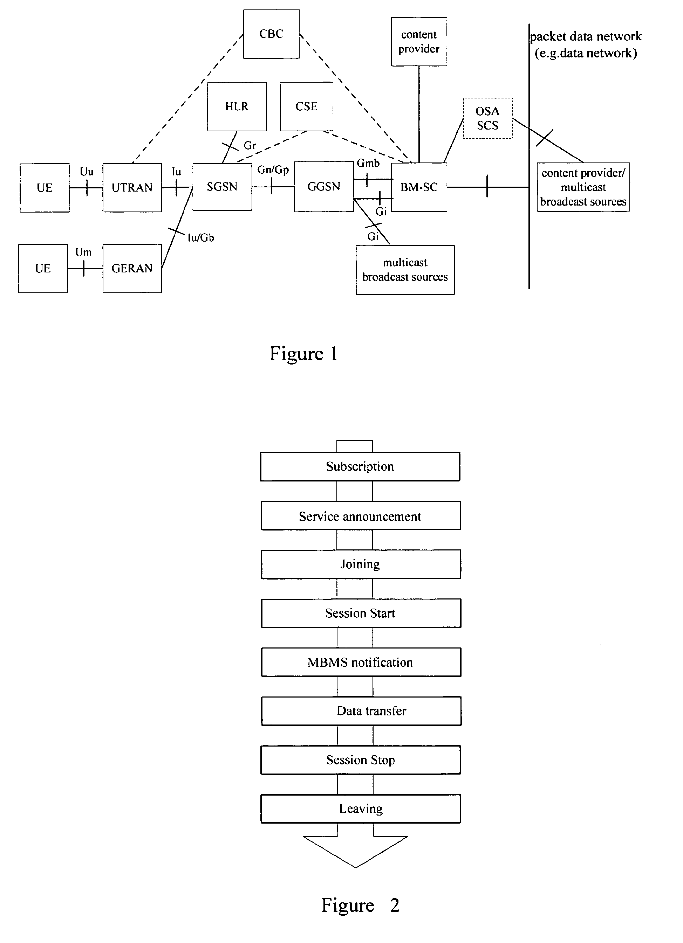

Figure 1 shows the system architecture of MBMS. As shown in Figure 1, in order to support MBMS, a new mobile network function - Broadcast Multicast-Service Centre (BM-SC) is added to a mobile network, which is the entrance of content providers for use in authorization and in initiating a MBMS bearer as well as transferring MBMS contents according to pre-defined schedule. In addition, to support MBMS, functional entities, such as User Equipment (UE), UMTS (Universal Mobile Telecommunication System) Terrestrial Radio Access Network (UTRAN), Global System for Mobile Communications (GSM)/Enhanced Data Rates for GSM Evolution (EDGE) Radio Access Network (GERAN), Serving General Packet Radio Service (GPRS) Support Node (SGSN), and GPRS Gateway Support Node (GGSN), are enhanced to incorporate relevant functions of MBMS.

MBMS includes the multicast mode and the broadcast mode. In the multicast mode, it is needed that a user subscribe to an appropriate multicast group, the service be activated, and appropriate accounting information be generated, while in the broadcast mode, the service can be activated without the user subscribing to join a group. As there is a difference between the multicast mode and the broadcast mode in service demands, the service procedures thereof are different.

Figure 2 is the flowchart of MBMS multicast mode, including successively such procedures as Subscription, Service announcement, Subscriber Joining, Session Start, MBMS notification, Data transfer, Session Stop, and Subscriber Leaving.

Figure 3 is the flowchart of MBMS broadcast mode, including successively such procedures as Service announcement, Subscriber Joining, Session Start, MBMS notification, Data transfer, and Session Stop.

In the data transmission phase of the above multicast and broadcast services, there are two modes of MBMS data transmission between UTRAN and UE: the Point to Multipoint (PTM) mode and Point to Point (PTP) mode. In the PTM mode, the same data are sent via the MBMS PTM traffic channel (MTCH), and may be received by all UEs that have joined the multicast service or are interested in the broadcast service. In the PTP mode, data are sent via a dedicated traffic channel (DTCH), and can be received only by one appropriate UE.

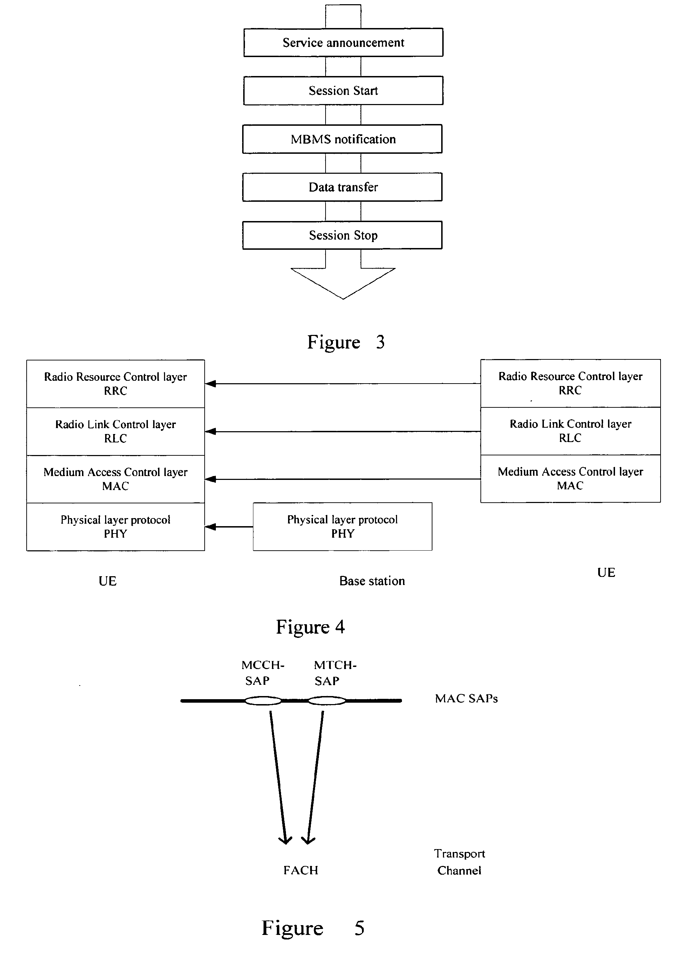

In the transmission mode of MBMS PTM, relevant radio control information, including service information, access information, radio bearer information, and FLC (Frequency Layer Convergency) information, are all transferred by the Radio Resource Control (RRC) layer via the logical channel, i.e. MBMS point-to-multipoint Control Channel (MCCH). Figure 4 shows the stack structure of the MCCH protocol. As shown in Figure 4, MCCH protocol units include successively from above to below: RRC layer, Radio Link Control (RLC) layer, Media Access Control (MAC) layer, and physical (PHY) layer.

Figure 5 shows the mapping relation between the logical channel of the MAC layer and the Forward Access Channel (FACH) of the PHY layer. As shown in Figure 5, in the existing systems, MCCH information, i.e. the control information of MBMS, is all mapped to the FACH for transmission.

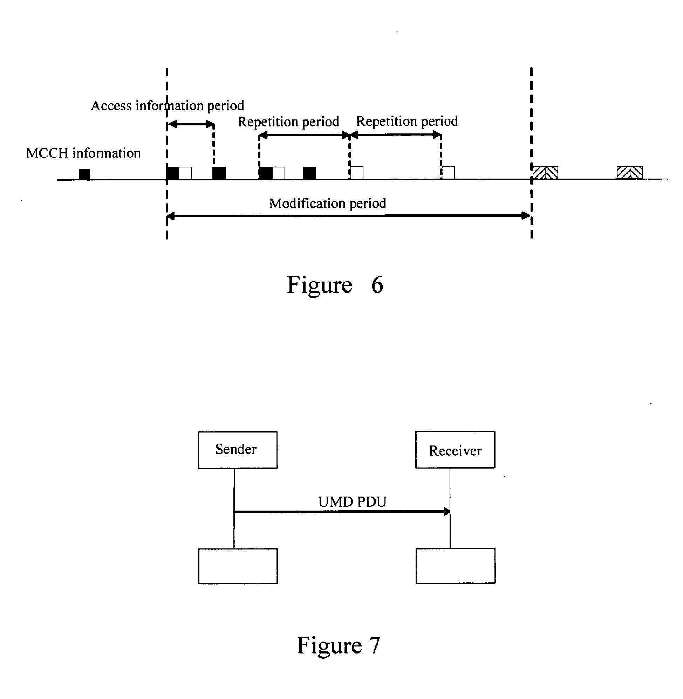

Figure 6 shows the scheduling of transmission of MCCH information. As shown in Figure 6, MCCH information is transferred in a fixed scheduling mode. And in order to improve the reliability, UTRAN needs to transmit the MCCH information repeatedly. The period for transmitting the MCCH information repeatedly is referred to as repetition period. The complete MCCH information will be transmitted periodically based on the repetition period. Modification period is defined as an integral multiple of a repetition period. The MCCH information has to be modified within each modification period. The access information of MBMS can be periodically transmitted based on the period of access information and the period of access information is an integral division of a repetition period.

MCCH information is further categorized into critical info and non-critical info. The critical info includes MBMS adjacent cell information, MBMS service information, and MBMS radio bearer information and is the information that needs to be transmitted repeatedly on a periodic basis. The contents of MCCH information transmitted in a repetition period remain unchanged while it can be modified only when being transmitted for the first time in a modification period. The non-critical info refers to the MBMS access information which is the information that need not to be transmitted repeatedly on a periodic basis and can be modified at any time.

In the prior art, RLC transfers MCCH information in the unconfirmed mode (UM), and one RLC UM entity is used to transfer the criterion and non-critical info via one MCCH logical channel. Refer to Figure 7, which is the diagram of the transmission mode of MBMS control information. In the prior art, the transmission mode of MBMS control information includes mainly the sending process of the RLC UM entity of the sender and the receiving process of the RLC UM entity of the receiver. In each transmission period, one or several Protocol Data Units (PDU) can be sent, and MAC decides the size and number of PDU within each transmission period.

At present, the sending process of an Unconfirmed Mode Data Protocol Data Unit (UMD PDU) includes: after receiving the transmission request from the higher layer for transferring UMD, the RLC UM entity of the sender schedules an RLC Service Data Unit (SDU) received from the higher layer to send the data. If there is one or multiple RLC SDU that have been scheduled to send the data, the RLC UM entity will first instruct the lower layer to receive the data including the number and size of SDU from the higher layer; and then fragment the SDU according to the size of PDU indicated by the lower layer and cascade the PDUs if possible. Thereafter, set the field of sequence number as VT(US), and set a field of length indication for each SDU that ends in a UMD PDU. Finally, submit the requested number of UMD PDUs to the lower layer, i.e. the MAC layer, and update VT(US) for each UMD PDU submitted to the lower layer while buffering the SDUs that have not been submitted to the lower layer.

The process of receiving UMD PDU includes: after receiving a group of UMD PDU from the lower layer, the RLC UM entity of the receiver updates VR(US) according to the received UMD PDU; if the updating step of VR(US) is not equal to 1, discard the SDU of which a fragment is in the lost UMD PDU, otherwise, reassemble the received UMD PDU into RLC SDU and submit the reassembled RLC SDU to the higher layer, i.e. the RRC layer.

Specifically, the sending procedure of the RLC UM entity of the sender, after the start of the current modification period, includes the steps of:
Step A1: The current modification period starts, in the first repetition period, the higher layer of MCCH, i.e., RRC, sends to the RLC UM entity via SDU the control information that need to be sent, and the RLC UM entity, after receiving the SDU, performs Step A2.
Step A2: The RLC UM makes segmentation and/or concatenation processing of the received SDU, and reassembles into UMD PDU, which is hereinafter simplified as PDU.

The format of UMD PDU is shown as Table 1:

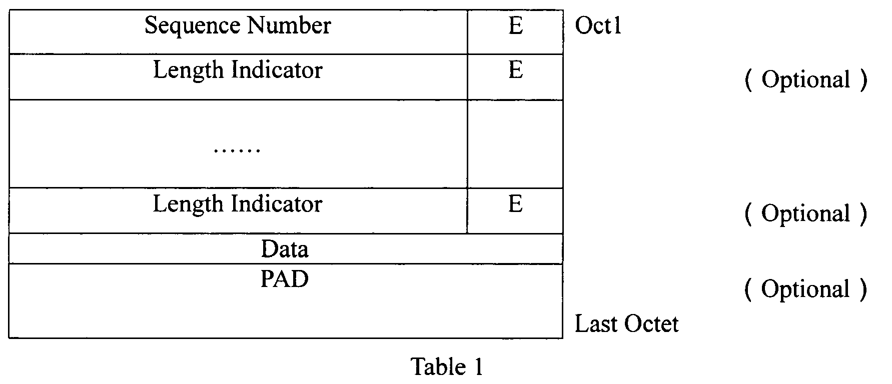

In the format of UMD PDU of the RLC protocol, the Length Indicator (LI) marks the ending position of the RLC SDU in the PDU. Apart from some pre-defined special values, LI indicates the number of bytes from the ending position of RLC header in the UMD PDU to the last byte of RLC SDU in this PDU. LI includes 7 or 15 bits. In the UM mode, if the size of the largest UMD PDU is <= 125 bytes, the LI of 7 bits is used while LI of 15 bits is used in other situations. The meaning of each special value of 7-bit and 15-bit LI are shown in Table 2 and Table 3, respectively, wherein Table 2 is the description of the meaning of each special value of 7-bit LI, and Table 3 is the description of the meaning of each special value of 15-bit LI.

**Table 2**

| Bit | Description |
|---|---|
| 0000000 | The previous RLC PDU was exactly filled with the last segment of an RLC SDU and there is no "Length Indicator" that indicates the end of the RLC SDU in the previous RLC PDU. |
| 1111100 | UMD PDU: The first data octet in this RLC PDU is the first octet of an RLC SDU. AMD PDU: Reserved (PDUs with this coding will be discarded by this version of the protocol). |
| 1111101 | Reserved (PDUs with this coding will be discarded by this version of the protocol). |
| 1111110 | AMD PDU: The rest of the RLC PDU includes a piggybacked STATUS PDU. UMD PDU: Reserved (PDUs with this coding will be discarded by this version of the protocol). |
| 1111111 | The rest of the RLC PDU is padding. The padding length can be zero. |

**Table 3**

| Bit | Description |
|---|---|
| 000000000000000 | The previous RLC PDU was exactly filled with the last segment of an RLC SDU and there is no "Length Indicator" that indicates the end of the RLC SDU in the previous RLC PDU. |
| 111111111111011 | The last segment of an RLC SDU was one octet short of exactly filling the previous RLC PDU and there is no "Length Indicator" that indicates the end of the RLC SDU in the previous RLC PDU. The remaining one octet in the previous RLC PDU is ignored. |
| 111111111111100 | UMD PDU: The first data octet in this RLC PDU is the first octet of an RLC SDU. AMD PDU: Reserved (PDUs with this coding will be discarded by this version of the protocol). |
| 111111111111101 | Reserved (PDUs with this coding will be discarded by this version of the protocol). |
| 111111111111110 | AMD PDU: The rest of the RLC PDU includes a piggybacked STATUS PDU. UMD PDU: Reserved (PDUs with this coding will be discarded by this version of the protocol). |
| 111111111111111 | The rest of the RLC PDU is padding. The padding length can be zero. |

Since the SDU including critical info and SDU including non-critical info can not be concatenated in one PDU, it is necessary in this step that the RLC UM entity differentiates in real time the information type of each received SDU and makes segmentation/concatenation processing according to the information type of SDU, i.e., making segmentation/concatenation processing of the SDU including critical info and reassembling into PDU including critical info while making segmentation/concatenation processing of the SDU including non-critical info and reassembling into PDU including non-critical info.

Step A3: The RLC UM entity sets a sequence number for the reassembled PDU, sends the reassembled PDU to MAC via a MCCH logical channel, and decides whether the sent PDU includes critical info, if yes, save in the RLC UM entity the PDU including critical info, otherwise, do not save the PDU.

In the prior art, PDU including critical info and PDU including non-critical info share one space of sequence number. For example, a 7-bit space, wherein the sequence number of one space includes 0 - 127.

Step A4: the MAC layer conducts mapping of the MCCH logical channel on the FACH transmission channel of the PHY layer to send the PDU. At this time, one repetition period is over.

Step A5: Decide whether the current modification period is over, if yes, perform Step A7; otherwise, take the next repetition period as the current repetition period, perform Step A6.

Step A6: The RLC UM entity receives, within the current repetition period, the SDU transferred from RRC, differentiates the information type of the received SDU, if the information type is critical info, makes no processing of the SDU and just sends to the MAC layer the PDU including critical info saved in the RLC UM entity, and returns to Step A4; if the SDU includes non-critical info, makes segmentation/concatenation processing of the SDU, reassemble into PDU, sets a sequence number for the PDU, and sends the PDU to the MAC layer, and then returns to Step A4. In this repetition period, the sequence number set for the PDU including non-critical info belongs to the same space of sequence number as that of the sequence number of the PDU in the previous repetition period, but has a different value.

Step A7: Take the next modification period as the current modification period, reconstruct the RLC UM entity, i.e. delete the PDU saved in the above RLC UM entity, reset the status parameter to zero, and return to Step A1.

Corresponding to the RLC UM entity of the sender, in the RLC UM entity of the receiver, after a current modification period starts, the following steps are performed:
Step B1: The current modification period starts, and the RLC UM entity, within the first repetition period, attempts to reassemble an associated SDU whenever a PDU is received, saves the PDU according to the sequence number, and submits the reassembled SDU to the RRC layer. At this time, one repetition period is over.
Step B2: Decide whether the current modification period is over, if yes, perform Step B4; otherwise, take the next repetition period as the current repetition period, perform Step B3.
Step B3: Within the current repetition period, decide, according to the sequence number of the received PDU, whether the PDU with the same sequence number has been saved, if yes, discard the received PDU, and return to Step B2; otherwise, attempt to reassemble the PDU into associated SDU, save the PDU according to the sequence number, submit the reassembled SDU to the RRC layer, and return to Step B2.
Step B4: Take the next modification period as the current modification period, reconstruct the RLC UM entity, i.e. delete the PDU saved in the above RLC UM entity, reset the status parameter to zero, and return to Step B 1.

However, the above solution in the prior art has the problems as follows:
1. Since SDU including critical info and SDU including non-critical info use the same space of sequence number, the sequence number used for the RLC UM entity is strictly restricted and can not be used in a wraparound way. Take the 7-bit space of sequence number as an example, the so-called use in a non-wraparound way refers to: suppose that there are 60 PDUs including critical info and 20 PDUs including non-critical info in each repetition period; suppose that the sequence numbers of 0 - 59 are used in the first repetition period to represent PDUs including critical info, and the sequence numbers of 60 - 79 are used to represent PDUs including non-critical info; in the second repetition period, PDUs including critical info remain unchanged and the RLC UM entity re-transfers the PDUs saved in the previous repetition period while the new PDUs including non-critical info are sent using new sequence numbers, i.e. the numbers of 0 - 79 can not be used and new sequence numbers have to be assigned. As a result, the sequence number that can be used for PDUs including non-critical info can only come from the numbers of 80 - 127, in case that there are many repetition periods in one modification period and the existing sequence numbers are not sufficient, it will be needed to extend the number of bit of the space of sequence number, which, however, occupies the header overhead of PDU, thus increasing the header overhead of PDU, reducing the efficiency of information transmission, and increasing the cost.
2. The sequence number of PDU including non-critical info can not be used in a wraparound way because the receiver does not differentiate PDU including critical info from PDU including non-critical info. If the sequence number of PDU including non-critical info is re-used, e.g. the sequence numbers used in the first repetition period are 60 - 79 and the receiver saves the numbers while in the second repetition period, the numbers of 60 - 79 are re-used to represent new PDU, the receiver will discard the new PDU as a result of having saved the sequence number, which will cause data receiving errors.
3. As the RLC UM entity of the sender has to differentiate the information type of each received SDU and conduct segmentation/concatenation processing according to the type information of SDU, respectively, the processing made by the RLC UM entity in transferring information is complex with high volume of calculation, low efficiency, and poor performance.
4. In addition, as the solution in the prior art does not identify the scheduling methods for critical info and non-critical info, respectively, when the critical info and non-critical info reach the RLC UM entity at the same time, or when non-critical info arrives during re-transmission of PDU including critical info in the second and subsequent repetition periods of one modification period, the RLC UM entity may send first the PDU including critical info while PDU including non-critical info is delayed for transfer. In an extreme case, a PDU including non-critical info in one period of access information may be sent in the next period of access information, leading to a delayed receiving of the non-criterion MBMS information, i.e. access information by UE, which has an impact on the performance of UE in the counting process, reducing the accuracy of counting, prolonging the counting process, and affecting the system performance.

### Summary of the invention

In view of the above, the objective of this invention is to provide a method for information transmission so as to improve the reliability and flexibility of information transmission and the overall performance of the system.

To achieve the above objective, the specific solution in accordance with this invention is as follows:
This invention provides a method for information transmission, including the steps of: deciding whether the current SDU to be sent includes an SDU that needs to be processed with higher priority, if not, processing successively each SDU to be sent; if yes, deciding further whether the SDU that need not be processed with higher priority is being processed, if yes, interrupting the processing of the current SDU, processing the SDU that needs to be processed with higher priority, and then processing the SDU of which the processing has been interrupted; otherwise, processing the information of each SDU to be sent in the order of priority.

The step of interrupting the processing of the current SDU specifically includes: interrupting the segmentation/concatenation and transfer of the current SDU. Alternatively, the step of interrupting the processing of the current SDU specifically includes: interrupting only the transfer of the current SDU, and all the PDUs encapsulated with the current SDU possessing continuous sequence numbers.

In the above solution, the SDU to be sent is encapsulated in PDUs with continuous sequence numbers, and the method further includes sending the PDUs in an out-of-sequence order.

In the above solution, the SDU includes segments of SDU, or the indicator of the ending position of SDU, or a combination of the two. The SDU that needs to be processed with higher priority includes one or more than one SDU of the same type, or includes one or more than one SDU of different types.

In the above solution, the step of handing the SDU includes: segmenting and concatenating the SDU into one or more than one PDU while the SDU that needs to be processed with higher priority and the SDU that need not be processed with higher priority can not be concatenated into one PDU, wherein the PDU includes the UMD PDU in the UM mode under the WCDMA/TD-SCDMA RLC protocol.

In the above solution, SDU information of different types corresponds to different priorities, then whether the information needs to be processed with higher priority is decided by the priority level; alternatively, whether the information needs to be processed with higher priority depends on the features of SDU information of different types, or on the transmission demand.

In the above solution, the SDU that needs to be processed with higher priority includes the non-critical info in the MBMS control information; the SDU of which the processing is interrupted includes the critical info in the MBMS control information. Then the method specifically includes the steps of:
deciding the type of the SDU information to be sent, if it is non-critical info, segmenting and concatenating the information, sending the information, and terminating the current procedure; if it is critical info, performing next step;
segmenting/concatenating, and sending the critical info, meanwhile, monitoring in real time whether there is new non-critical info to be sent, if yes, performing next step;
interrupting the segmenting/concatenating and sending of the critical info, segmenting/concatenating and sending the non-critical info before continuing the segmenting/concatenating and sending of the critical info of which the processing has not been completed.

Alternatively, the method specifically includes the steps of:
deciding the type of the SDU information to be sent, if it is non-critical info, segmenting/concatenating and sending the information, and terminating the current procedure; if it is critical info, performing next step;
segmenting/concatenating, and sending the critical info, meanwhile, monitoring in real time whether there is new non-critical info to be sent, if yes, performing next step;
completing all the segmenting and concatenating operations for the critical info, saving all the segments of the critical info that have not been sent after receiving the non-critical info, segmenting/concatenating and sending the non-critical info before eventually sending the saved segments of the critical info.

In the above solution, encapsulate each PDU for each SDU according to a preset fixed size.

In accordance with this invention, two RLC UM entities or two modules in one RLC UM entity are employed to conduct independent segmentation/concatenation processing of the control information of different information types, respectively. As a result, it is avoided to differentiate in real time the information type of each received SDU during segmentation/concatenation processing, thus reducing the calculating volume of the RLC UM entity, and improving the working efficiency of the RLC UM entity as well as the overall performance thereof.

As in this invention, PDU including the information that needs to be periodically sent and PDU including the information that need not be periodically sent use two different spaces of sequence number, respectively, the restriction on the number of sequence number is reduced, and the number of bit of the space of sequence number is indirectly reduced, which further reduces the header overhead of PDU and raises the transmission efficiency.

In accordance with the method of this invention, a special scheduling mechanism is employed to process first the SDU information that needs to be processed with higher priority, e.g. process and send the access information of the MBMS control information, i.e. the non-critical info, first, such that a delay of access information could be avoided, the accuracy of counting is raised, the process of counting is shortened, and the reliability and flexibility of information transmission as well as the overall system performance are improved.

### Brief description of the drawings

Figure 1 is the diagram of the system architecture of MBMS;
Figure 2 is the flowchart of multicast service of MBMS;
Figure 3 is the flowchart of broadcast service of MBMS;
Figure 4 shows the structure of protocol stack of MCCH;
Figure 5 shows the mapping relation between the logical channel of the MAC layer and the FACH channel of the PHY layer;
Figure 6 shows the scheduling of MCCH information transmission;
Figure 7 shows the transmission mode of MBMS control information;

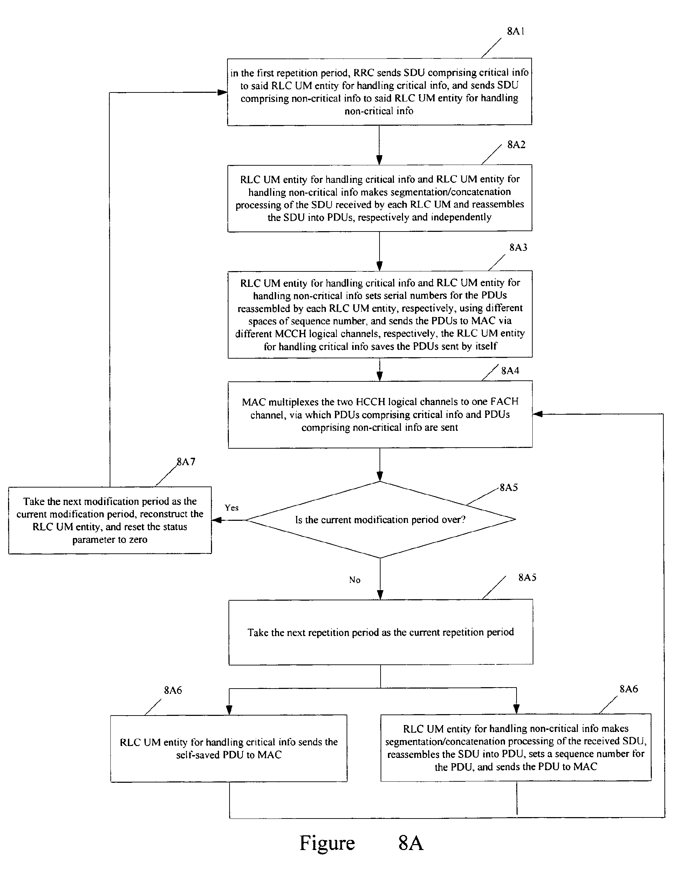

Figure 8A is the flowchart of the method for transferring control information at the sender in accordance with the first embodiment of this invention;

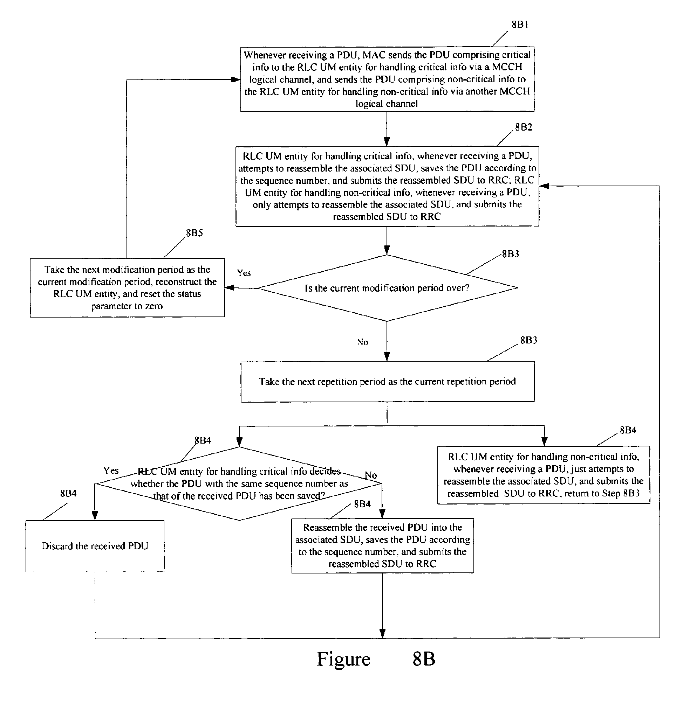

Figure 8B is the flowchart of the method for transferring control information at the receiver in accordance with the first embodiment of this invention;

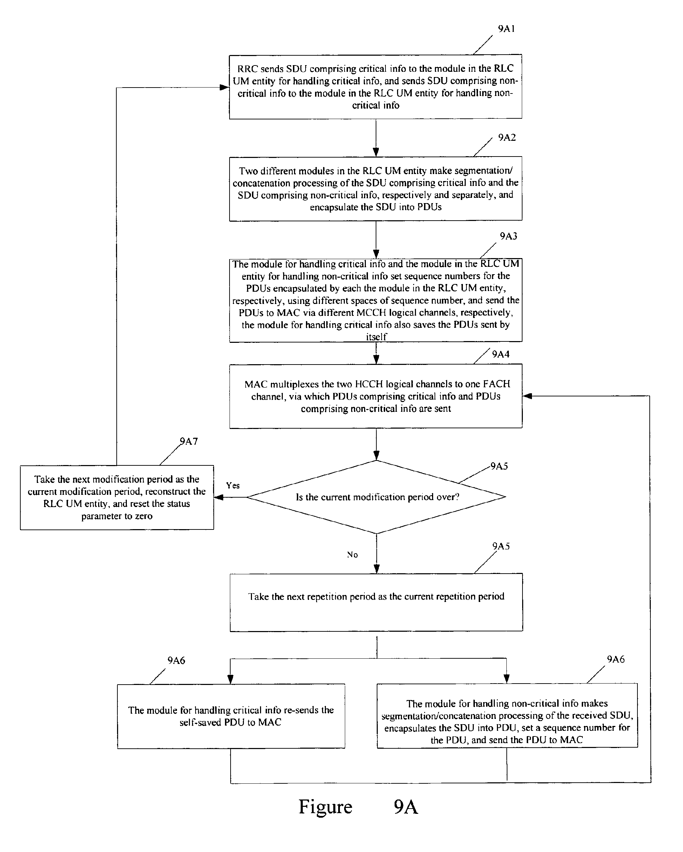

Figure 9A is the flowchart of the method for transferring control information at the sender in accordance with the second embodiment of this invention;

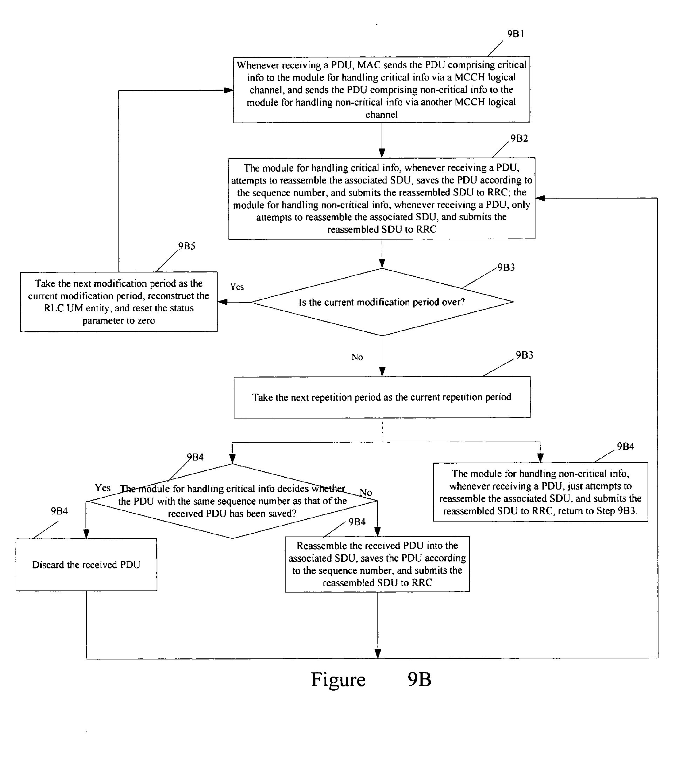

Figure 9B is the flowchart of the method for transferring control information at the receiver in accordance with the second embodiment of this invention;

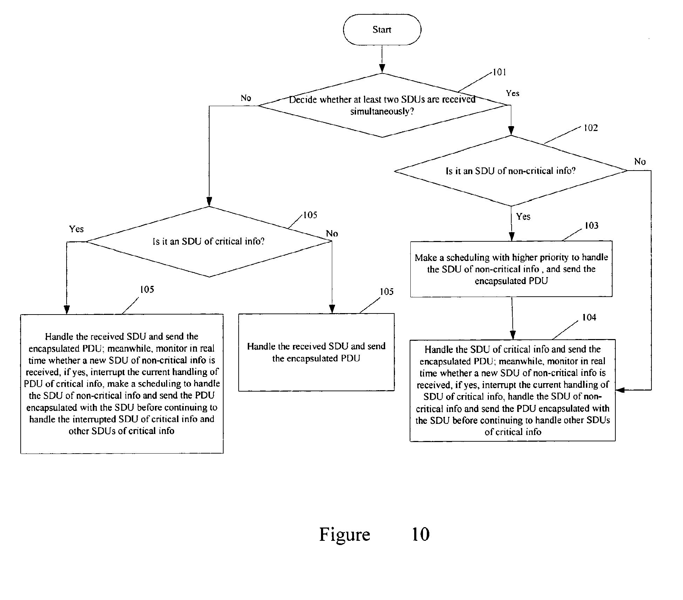

Figure 10 is the processing flowchart of the method for information transmission in accordance with this invention;

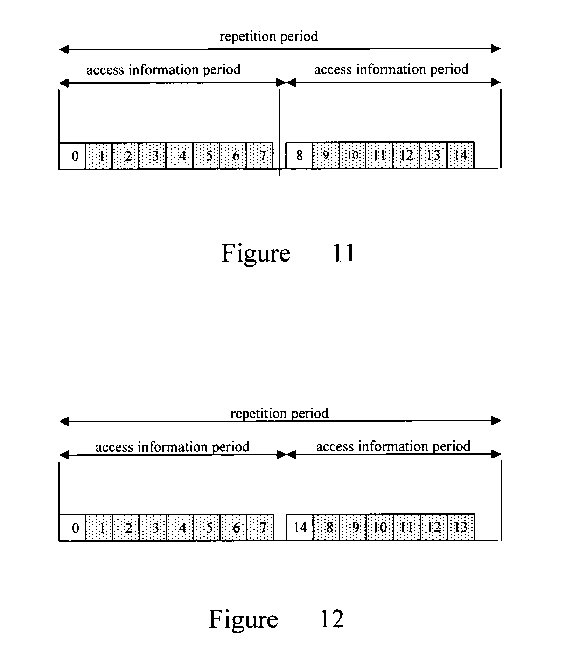

Figure 11 is a schematic illustrating a transmission relation between different SDUs after the method for information transmission of this invention is adopted; and
Figure 12 is a schematic illustrating another transmission relation between different SDUs after the method for information transmission of this invention is adopted.

### Detailed Description of the Invention

The implementation of this invention is hereinafter further described with reference to the accompanying drawings and specific embodiments.

The core idea of the first method for information transmission in accordance with this invention is: conducting independent segmentation/concatenation and numbering operations during the transmission of service control information for the information that needs to be periodically sent and the information that need not be periodically sent, respectively, before sending the information while numbering the each kind information using independent spaces of sequence number and sending the information via different logical channels; and conducting the receiving reassembly of the information that needs to be periodically sent and the information that need not be periodically sent, respectively, at the receiver.

A detailed description is hereinafter given by taking the critical info and non-critical info in the MBMS control information as an example, wherein the critical info is information that needs to be periodically sent and the non-critical info is information that need not be periodically sent.

Based on the above core idea, in the first embodiment of this invention, two link-layer logic entities, RLC, are configured in the logic entity RRC which produces service control messages for use in processing critical info and non-critical info, respectively. Meanwhile two logical channels are for use in transferring the information, and in the MAC layer, the two logical channels are multiplexed to one FACH for transferring information. In the first embodiment, the transmission method of MBMS control information includes mainly the sending process of the RLC UM entity of the sender and the receiving process of the RLC UM entity of the receiver.

Figure 8A is the performing flowchart of the method for transferring control information at the sender in accordance with the first embodiment of this invention. After the current modification period starts, the RLC UM entity at the sender performs the following steps:
Step 8A1: the current modification period starts, and in the first repetition period, the higher layer of MCCH, i.e. RRC, differentiates the type of the control information to be sent, sends the SDU including critical info to the RLC UM entity processing critical info, and sends the SDU including non-critical info to the RLC UM entity processing non-critical info; after the RLC UM entities receive the SDU, perform Step 8A2.
Step 8A2: the RLC UM entity processing critical info and the RLC UM entity processing non-critical info conduct segmentation/concatenation operations for the SDU received by each RLC UM entity, respectively and independently from each other, to reassemble the SDU into PDU.
   Since the SDU including critical info and SDU including non-critical info can not be concatenated into one PDU, in contrast with the prior art, this invention uses two RLC UM entities to conduct independent segmentation/concatenation operations for the control information of different information types, which avoids the problem of differentiating in real time the information type of each received SDU, greatly simplifies the process of segmentation/concatenation, reduces the volume of calculation by the RLC UM entity, and improves the working efficiency of the RLC UM entity as well as the overall performance thereof.
Step 8A3: the RLC UM entity processing critical info and RLC UM entity processing non-critical info set sequence numbers independently for the PDU reassembled by each RLC UM entity using different spaces of sequence number, respectively, and send the reassembled PDU to the MAC layer via different MCCH logical channels. Meanwhile, the RLC UM entity processing critical info needs to save the PDU sent.
   In accordance with this invention, PDU including critical info and PDU including non-critical info use two different spaces of sequence number, respectively. For example, the 7-bit space, wherein the sequence number of both spaces may comprise 0 - 127, respectively. Since the processing processes of the two RLC UM entities during information transmission are independent from each other, no conflict will be resulted due to the sequence numbers. Thus, compared with the prior art, the restriction on sequence number is relaxed. For example, in terms of the 7-bit space of sequence number, the number of sequence numbers for PDU including critical info is confined to 128 and so is that for PDU including non-critical info while in the prior art, in terms of the 7-bit space of sequence number, the sum of the sequence numbers for PDU including critical info and PDU including non-critical info is confined to 128. In comparison, this invention relaxes the restriction on the number of sequence numbers and reduces the number of bits of the space of sequence number indirectly, thereby reducing the header overhead of PDU and improving the transmission efficiency.
Step 8A4, in the MAC layer, the two MCCH logical channels are multiplexed to one FACH channel in the PHY layer, i.e. decide, after receiving the PDU from the RLC entities, the type of the information contained in the PDU according to the logical channel via which the PDU is transferred, indicate in the PDU the type of the information contained, and send the PDU via the FACH. At this time, one repetition period is over.
   In this step, in order to have the function of scrambled transmission, the function of multiplexing two MCCH logical channels needs to be added in the MAC layer in accordance with this invention. In this invention, the MAC protocol in the MAC layer uses the C/T field to differentiate different logical channels of the identical MCCH type, i.e. differentiate PDU including different types of information. For example, a 1-bit C/T field may be used to differentiate 2 MCCH logical channels, wherein the value of the C/T field may be 0 or 1. Value 0 represents that non-critical info is transferred, and value 1 represents that the channel is for use in transferring critical info.

The C/T field in this invention may be implemented in other ways as well, e.g. 2 bits may be used as the C/T field for the sake of extension. The principle, however, is similar.

Correspondingly, in the MAC layer, the two MCCH logical channels are multiplexed to one FACH of the PHY layer, and the PDU is extended to the format of MAC PDU before being transferred to the receiver, wherein the format of MAC PDU is as shown in Table 4:

**Table 4**

| Contents | Description |
|---|---|
| TCTF | Logical channel indicating the MCCH type |
| C/T | Number of logical channel for use in differentiating critical info/non-critical info |
| MAC SDU | Specific contents of SDU data |

Alternatively, in accordance with this invention, the multiplexing of the two MCCH logical channels in the MAC layer may not be implemented with the C/T field, instead, two TCTF values may be used to differentiate different logical channels of the identical MCCH type, i.e. take two values from the TCTF code based on the prior art to indicate the MCCH logical channel for use in transferring critical info and the channel for transferring non-critical info, respectively. The TCTF code on FACH in the prior art is as shown in Table 5:

**Table 5**

| Code value of TCTF | Description |
|---|---|
| 00 | Indicating BCCH |
| 01000000 | Indicating CCCH |
| 01000001-01111111 | reserved (PDUs with this coding will be discarded by this version of the protocol) |
| 10000000 | Indicating CTCH |
| 10000001-10111111 | reserved (PDUs with this coding will be discarded by this version of the protocol) |
| 11 | Indicating DCCH or DTCH on FACH |

The TCTF code on FACH in this invention is as shown in Table 6:

**Table 6**

| Code value of TCTF | Description |
|---|---|
| 00 | Indicating BCCH |
| 01000000 | Indicating CCCH |
| 01000001 | Indicating the number of MCCH logical channel transferring critical info |
| 01000010 | Indicating the number of MCCH logical channel transferring non-critical info |
| 01000011-01111111 | reserved (PDUs with this coding will be discarded by this version of the protocol) |
| 10000000 | Indicating CTCH |
| 10000001-10111111 | reserved (PDUs with this coding will be discarded by this version of the protocol) |
| 11 | Indicating DCCH or DTCH on FACH |

In the above Table 6, 01000001 is used to indicate the MCCH logical channel transferring critical info and 01000010 is used to indicate the channel transferring non-critical info. Thus different logical channels of the identical MCCH type can be differentiated by TCTF values. It is obvious that this is only one embodiment and two other different values of the TCTF code may be used as well to differentiate the MCCH logical channel transferring critical info and the MCCH logical channel transferring non-critical info.

In the above method in which two TCTF values are used for differentiating different logical channels of the identical MCCH type, the corresponding format of MAC PDU is as shown in Table 7:

**Table 7**

| Contents | Description |
|---|---|
| TCTF | Indicating the logical channels of MCCH type |
| MAC SDU | Specific contents of SDU data |

For the two MCCH logical channels, it is required that the MCCH logical channel for use in transferring non-critical info have a higher priority than the MCCH logical channel for transferring critical info. When making a scheduling, the MAC layer first schedules the data of the MCCH logical channel for transferring non-critical info.

Step 8A5: Decide whether the current modification period is over, if yes, perform Step 8A7; otherwise, take the next repetition period as the current repetition period, perform Step 8A6.

Step 8A6: in the current repetition period, RRC requests the RLC UM entity processing critical info to re-transfer the saved PDU including critical info, after receiving the request, the RLC UM entity processing critical info directly sends the self-saved PDU to the MAC layer, and return to Step 8A4; meanwhile RRC sends the SDU including non-critical info to the RLC UM entity processing non-critical info; the RLC UM entity processing non-critical info makes segmentation/concatenation processing of the received SDU, reassembles into PDUs including non-critical info, set sequence numbers for the PDU before sending the PDUs to the MAC layer, and return to Step 8A4.

In this repetition period, the sequence number set for the PDU including non-critical info belongs to the same space of sequence number as that of the sequence number of the PDU in the previous repetition period, but has a different value.

Step 8A7: Take the next modification period as the current modification period, reconstruct the RLC UM entity, i.e. delete the PDU saved in the above RLC UM entity, reset the status parameter to zero, and return to Step 8A1.

Refer to Figure 8B, corresponding to the RLC UM entity of the sender, in the RLC UM entities of the receiver, after a current modification period starts, the following steps are performed:
Step 8B 1: the current modification period starts, and in the first repetition period, the MAC layer, whenever receiving a PDU, decides the type of the PDU according to the C/T field of the PDU, i.e. whether the PDU includes critical info or non-critical info, sends the PDU including critical info to the RLC UM entity processing critical info via one MCCH logical channel, and sends the PDU including non-critical info to the RLC UM entity processing non-critical info via another MCCH logical channel.
Step 8B2: the RLC UM entity processing critical info and the RLC UM entity processing non-critical info receive and process the received PDU, respectively, wherein:
   the RLC UM entity processing critical info attempts to reassemble associated SDU whenever receiving a PDU, saves the PDU according to the sequence number, and submits the reassembled SDU to the RRC layer; the RLC UM entity processing critical info only attempts to reassemble associated SDU whenever receiving a PDU, and submits the reassembled SDU to the RRC layer.
Step 8B3: at this time, one repetition period is over. Decide whether the current modification period is over, if yes, perform Step 8B5; otherwise, take the next repetition period as the current repetition period.
Step 8B4: in the current repetition period, the RLC UM entity processing critical info and the RLC UM entity processing non-critical info receive and process the received PDU, respectively, wherein:
   the RLC UM entity processing critical info, whenever receiving a PDU, decides, according to the sequence number of the received PDU, whether the PDU with the same sequence number has been saved, if yes, discard the received PDU, and return to Step 8B3; otherwise, attempt to reassemble the received PDU into associated SDU, save the PDU according to the sequence number, submit the reassembled SDU to the RRC layer, and return to Step 8B3.
   The RLC UM entity processing non-critical info, whenever receiving a PDU, only attempts to reassemble the associated SDU, and submits the reassembled SDU to the RRC layer, and return to Step 8B3.
Step 8B5: Take the next modification period as the current modification period, reconstruct the RLC UM entity, i.e. delete the PDU saved in the above RLC UM entity, reset the status parameter to zero, and return to Step 8B 1.

In the above first embodiment of this invention, two RLC UM entities are employed to conduct segmentation/concatenation, numbering and reassembling for the critical info and non-critical info, respectively, and two logical channels are used to transfer the information.

In accordance this invention, it is possible to use one RLC UM entity as well to conduct segmentation/concatenation, numbering and reassembling for the critical info and non-critical info, respectively, while two logical channels are used to transfer the information. Refer to the following second embodiment for specific description.

Figure 9A is the performing flowchart of the method for transferring control information at the sender in accordance with the second embodiment of this invention. In this embodiment, two processing modules are configured in the RLC UM entity for use in processing critical info and non-critical info, respectively. After the current modification period starts, the sender performs the following steps:
Step 9A1: the current modification period starts, and in the first repetition period, the higher layer of MCCH, i.e. RRC, sends the control information to be sent to the RLC UM entity, wherein the SDU including critical info is sent to the module in the RLC UM entity for processing critical info and the SDU including non-critical info is sent to the module in the RLC UM entity for processing non-critical info.
Step 9A2: the two different modules in the RLC UM entity conduct segmentation/concatenation processing of the SDU including critical info and SDU including non-critical info separately and respectively, i.e. the module processing critical info makes segmentation/concatenation processing of the SDU including critical info, and reassembles into the PDU including critical info; the module processing non-critical info makes segmentation/concatenation processing of the SDU including non-critical info, and reassembles into the PDU including non-critical info.
Step 9A3: the module processing critical info and module processing non-critical info set sequence numbers independently for the PDU reassembled by each module using different spaces of sequence number, respectively, and send the reassembled PDU to the MAC layer via different MCCH logical channels. Meanwhile, the module processing critical info needs to save the PDU sent.
Step 9A4: in the MAC layer, the two MCCH logical channels are multiplexed to one FACH in the PHY layer, and the PDU including critical info and PDU including non-critical info are sent via this FACH. At this time, one repetition period is over.
   Same as the above first embodiment, in this step, in order to support the function of scrambled transmission, the MAC layer, after multiplexing the two MCCH logical channels to one FACH of the PHY layer, extends the PDU to the format of MAC PDU before transferring the PDU to the receiver, wherein the format of MAC PDU is as shown in Table 4.
   In addition, for the two MCCH logical channels, it is required that the MCCH logical channel for use in transferring non-critical info have a higher priority than the MCCH logical channel for transferring critical info. When making a scheduling, the MAC layer first schedules the data of the MCCH logical channel for transferring non-critical info.
Step 9A5: Decide whether the current modification period is over, if yes, perform Step 9A7; otherwise, take the next repetition period as the current repetition period, perform Step 9A6.
Step 9A6: in the current repetition period, RRC requests the module in the RLC UM entity for processing critical info to re-transfer the saved PDU including critical info, after receiving the request, the module for processing critical info directly sends the self-saved PDU to the MAC layer, and return to Step 9A4; meanwhile RRC sends the SDU including non-critical info to the module for processing non-critical info; the module for processing non-critical info makes segmentation/concatenation processing of the received SDU, reassembles into PDU including non-critical info, set a sequence number for the PDU before sending the PDU to the MAC layer, and return to Step 9A4.
   In this repetition period, the sequence number set for the PDU including non-critical info belongs to the same space of sequence number as that of the sequence number of the PDU in the previous repetition period, but has a different value.
Step 9A7: Take the next modification period as the current modification period, reconstruct the RLC UM entity, i.e. delete the PDU saved in the above RLC UM entity, reset the status parameter to zero, and return to Step 9A1.

Refer to Figure 9B, corresponding to the sender, after a current modification period starts, the receiver performs the following steps:
Step 9B1: the current modification period starts, and in the first repetition period, the MAC layer, whenever receiving a PDU, decides the type of the PDU according to the C/T field of the PDU, i.e. whether the PDU includes critical info or non-critical info, sends the PDU including critical info to the module in the RLC UM entity for processing critical info via one MCCH logical channel, and sends the PDU including non-critical info to the module in the RLC UM entity for processing non-critical info via another MCCH logical channel.
Step 9B2: the module processing critical info and the module processing non-critical info receive and process the received PDUs, respectively, wherein:
   the module for processing critical info attempts to reassemble the associated SDU whenever receiving a PDU, saves the PDU according to the sequence number, and submits the reassembled SDU to the RRC layer; the module for processing non-critical info only attempts to reassemble the associated SDU whenever receiving a PDU, and submits the reassembled SDU to the RRC layer.
Step 9B3: at this time, one repetition period is over. Decide whether the current modification period is over, if yes, perform Step 9B5; otherwise, take the next repetition period as the current repetition period.
Step 9B4: in the current repetition period, the module processing critical info and the module processing non-critical info receive and process the received PDU, respectively, wherein
   the module for processing critical info, whenever receiving a PDU, decides, according to the sequence number of the received PDU, whether the PDU with the same sequence number has been saved, if yes, discard the received PDU, and return to Step 9B3; otherwise, attempt to reassemble the associated SDU with the received PDU, save the PDU according to the sequence number, submit the reassembled SDU to the RRC layer, and return to Step 9B3;
   the module for processing non-critical info, whenever receiving a PDU, just attempts to reassemble the associated SDU, and submits the reassembled SDU to the RRC layer, and return to Step 9B3.
Step 9B5: Take the next modification period as the current modification period, reconstruct the RLC UM entity, i.e. delete the PDU saved in the above RLC UM entity, reset the status parameter to zero, and return to Step 9B 1.

As there is no scheduling method in the prior art for the PDU including critical info and PDU including non-critical info, this invention discloses as well another method for information transmission. In accordance with this method, during the processing of the SDU information, if, when processing a certain type of SDU information, another type of SDU information is received and the newly received SDU information needs to be processed with higher priority, then interrupt the processing of the current SDU information, process first the newly received SDU information, and complete the processing of the newly received SDU before continuing the processing of the SDU information that has been interrupted. The SDU information includes all the segmentation of the SDU and the indicator of the ending position of SDU. The processing of the SDU information includes segmentation/concatenation and transmission operations.

Whether the information herein needs to be processed with higher priority may depend on the priority. In this case, SDU information of different types will correspond to different priorities; or depend on the features of different types of SDU information, e.g. non-critical info needs to be sent before critical info; or depend on the sending demand at that time, e.g. SDU information of Type C may need to be sent before SDU information of Type A according to the requirement of service. Suppose hereinafter that the order of processing the information depends on the feature of SDU information, then the detailed description of the implementation of this method of the invention is as follows.

Suppose that there are two types of SDU: SDU1 and SDU2, and according to the features of the two types of SDU, SDU2 needs to be processed before SDU1 is processed, then there are two cases in accordance with this invention of the segmentation/concatenation and sending process of SDU information:
The first case is that the SDU for which the current sender is making fragment, cascade and sending operation is SDU1, and the newly received SDU is SDU2. In this case, there are two processing approaches as well: (1) interrupt the fragment, cascade and sending process of SDU1, and make the fragment, cascade and sending operation for SDU2 before continuing the fragment, cascade and sending of SDU1; (2) continue the segmentation/concatenation processing of SDU1, but save instead of sending the PDU that is encapsulated after SDU2 is received, then conduct fragment, cascade and sending of SDU2; send all the information of SDU2 before sending the remaining segments of SDU1, i.e. all the saved PDU corresponding to SDU1. For example, when the sending entity of UM needs to send an SDU of non-critical info, if there is an SDU of critical info in the current buffer and part of the SDU of critical info has undergone segmentation/concatenation processing and has been sent in encapsulated PDU while a remaining part is left without being processed, then the sending entity of UM will make segmentation/concatenation processing of the remaining data of the SDU of critical info, encapsulate the data into PDU, and save the encapsulated PDU; thereafter, the sending entity of UM makes segmentation/concatenation processing of the SDU of non-critical info to be sent, encapsulates the data into PDU before sending the PDU; after sending the PDU encapsulated with the SDU of non-critical info, send the saved PDU encapsulated with the SDU of critical info.
The second case is that the SDU for which the current sender is making segmentation/concatenation and transmission operations is SDU2 and the newly received SDU is SDU1. In this case, just make segmentation/concatenation processing of SDU2 and SDU1 successively in the order of receiving, encapsulate the data into PDU and send the PDU.

In this invention, it is not allowed to cascade SDU information of different types into one PDU, for example, it is not allowed to cascade SDU of non-critical info and SDU of critical info in one PDU for transmission. The PDU herein refers to UMD PDU in the UM mode under the WCDMA/TD-SCDMA RLC protocol. The SDU information refers to segments of SDU, or indicator of ending position of SDU, or a combination of the two. That is to say, it is not allowed to cascade the fragment of an SDU of non-critical info and the fragment of an SDU of critical info into one PDU. Likewise, it is not allowed, either, to cascade the indicator of the ending position of an SDU of non-critical info and the fragment of an SDU of critical info into one PDU, and vice versa.

Suppose that the first SDU and the second SDU represent SDUs of different types, respectively, and the second SDU is in a higher priority of processing than the first SDU, then the basic idea of another method for information transmission in accordance with this invention is as follows:
The sending entity decides whether the SDUs to be processed currently include simultaneously the first SDU and second SDU, if the first SDU and second SDU are included simultaneously, the sending entity will first conduct segmentation/concatenation processing of the second SDU, encapsulate the SDU into PDU, set a number for the PDU and send the PDU before conducting segmentation/concatenation and transmission operations of the first SDU. Meanwhile, in the process of segmentation/concatenation and sending, if a second SDU is received, interrupt the processing of the first SDU, and conduct segmentation/concatenation and transmission operations for the second SDU before continuing the processing of the first SDU. If only the second SDU is included, the sending entity just conducts segmentation/concatenation processing of the second SDU, encapsulates the SDU into PDU, sets a number for the PDU and sends the PDU. If only the first SDU is included, conduct segmentation/concatenation and transmission operations for the first SDU, and meanwhile, in the process of segmentation/concatenation and sending, if a second SDU is received, interrupt the processing of the first SDU, and conduct segmentation/concatenation and transmission operations for the second SDU before continuing the processing of the first SDU.

In fact, during the segmentation/concatenation and transmission operations for the first SDU, it is likely to receive second SDU many times and interrupt the processing of first SDU many times to insert the processing of second SDU; and it is also likely to insert the processing of second SDU once while one insertion includes multiple second SDUs. In a word, whatever is the case, the processing principle is the same, i.e. interrupt the processing of the first SDU, process the second SDU first, and complete the processing of the second SDU before continuing the processing of the first SDU.

In addition, the first SDU and second SDU herein do not always correspond to a certain type, i.e. it is not prescribed that the first SDU corresponds only to SDU information of Type A and the second SDU corresponds only to Type B. The first SDU and second SDU herein are relative to each other. For example, there are SDU information of Types A, B, and C, and the priority for processing is that Type C has precedence over Type B and Type B has precedence over Type A. Then, during the processing of SDU information of Type A, if SDU information of Type B is received, interrupt the processing of SDU information of Type A and process the SDU information of Type B first. Herein, the first SDU refers to SDU information of Type A while the second SDU refers to SDU information of Type B. If SDU information of Type C is received during the processing of SDU information of Type B, then interrupt the processing of SDU information of Type B and process the SDU information of Type C first. The first SDU at this time refers to the SDU information of Type B while the second SDU refers to the SDU information of Type C. In a word, just follow the principle of processing the SDU information that needs to be processed with higher priority. It is possible to insert, in the processing process of the first SDU, once or for multiple times, one or multiple SDU of the same type, or insert, in the processing process of the first SDU, once or for multiple times, one or multiple SDU of different types.

Take as an example the processing of SDU of critical info and SDU of non-critical info by a sending entity of UM. As shown in Figure 10, the method for information transmission put forward by this invention includes the steps of:
Step 101: The RRC layer sends SDU to the RLC UM entity, and the RLC UM entity decides whether there are at least two SDUs that have been received simultaneously, if yes, perform Step 102; otherwise, perform Step 105.
Step 102: Decide whether there is SDU of non-critical info among the received SDUs, if there is, perform Step 103, otherwise, perform Step 104.
Step 103: Process the SDU of non-critical info first, i.e. conduct segmentation/concatenation processing of the SDU of non-critical info, encapsulate into PDU, set a number for the PDU, and send the encapsulated PDU.
Step 104: Process the SDU of critical info, i.e. conduct segmentation/concatenation processing of the SDU of critical info, encapsulated into PDU, set a number for the PDU, and send the encapsulated PDU; meanwhile, the RLC UM entity monitors in real time whether new SDU of non-critical info has been received, if yes, interrupt the current processing of SDU of critical info, make a scheduling immediately to process the received new SDU of non-critical info, and send the PDU encapsulated with this SDU of non-critical info before continuing to process the interrupted SDU of critical info and other SDU of critical info, then terminate the current processing process.
   Herein, the interrupting the processing may comprise interrupting the segmentation/concatenation and transmission operations, or comprise interrupting only the sending operation.
Step 105: Decide whether the received SDU is SDU of critical info, if the SDU is SDU of non-critical info, process this SDU of non-critical info, i.e. conduct segmentation/concatenation, encapsulate into PDU, set a number for the PDU, and send the encapsulated PDU; if the SDU is SDU of critical info, process and send this SDU of critical info, meanwhile, the RLC UM entity monitors in real time whether new SDU of non-critical info has been received, if yes, interrupt the processing of the current SDU of critical info, make an immediate scheduling to process the received new SDU of non-critical info, and send the PDU encapsulated with this SDU of non-critical info before continuing to process the interrupted SDU and other SDU of critical info.

Herein, the interrupting of the processing may comprise interrupting the segmentation/concatenation and transmission operations, or comprise interrupting only the sending operation.

Suppose that SDU information of different types includes SDU of non-critical info and SDU of critical info, then another method for information transmission in accordance with this invention is implemented as follows, wherein SDU of non-critical info has precedence over SDU of critical info for being processed.

As shown in Figure 11, the current SDU for which the UM sending entity is conducting segmentation/concatenation and transmission operations is SDU of critical info, and the PDU encapsulated with this SDU of critical info are shaded with dots in the figure. Before an SDU of non-critical info is received, the SDU of critical info has been encapsulated into 7 PDUs, with the sequence numbers of 1 to 7; After the SDU of non-critical info is received, the UM sending entity interrupts the segmentation/concatenation and transmission operations for the SDU of critical info while starting the segmentation/concatenation operation for the SDU of non-critical info, encapsulating into a PDU with the sequence number of 8, and then sending the PDU with the sequence number of 8; after the sending is completed, the UM sending entity conducts the segmentation/concatenation and transmission operations for the remaining part of the SDU of critical info, encapsulates into PDUs with the sequence numbers of 9 - 14, and sends the PDUs with the numbers of 9 - 14 orderly.

As shown in Figure 12, the current SDU for which the UM sending entity is conducting segmentation/concatenation and transmission operations is SDU of critical info, and the PDUs encapsulated with this SDU of critical info are shaded with dots in the figure. Before an SDU of non-critical info is received, the SDU of critical info has been encapsulated into 7 PDUs, with the sequence numbers of 1 to 7; after the SDU of non-critical info is received, the UM sending entity continues the segmentation/concatenation operation for the rest of the SDU of critical info and encapsulates into PDUs with the sequence numbers of 8 to 13 without, however, sending the PDUs with the numbers of 8 to 13, instead, the UM sending entity saves the PDUs with the numbers of 8 to 13; then, conduct segmentation/concatenation operation for the SDU of non-critical info, encapsulate into a PDU with the sequence number of 14, and immediately send the PDU with the number of 14 after encapsulation. After completing the sending of PDU No. 14, the UM sending entity sends orderly the PDUs with numbers 8 to 13 that have been saved by the entity itself.

To ensure that the sending entity is able to conduct segmentation/concatenation and transmission operations immediately after receiving the SDU sent from the higher layer, a fixed size of PDU according to which to make encapsulation may be set in advance. Then, after receiving each SDU, the UM sending entity will conduct segmentation/concatenation operation for the received SDU according to the fixed size that has been set, and encapsulate each SDU into one or more than one PDU of fixed size. In this case, whenever there are PDUs to be sent, PDUs can be scheduled according to the demanded number. When scheduling PDUs, as long as there is in the buffer the PDUs corresponding to the SDU information that needs to be processed with higher priority, such as the SDU of non-critical info, send first the PDU corresponding to the SDU information that needs to be processed with higher priority. Obviously, this method for information transmission provided by the invention can support scrambled transmission. In other words, since one SDU may be encapsulated into multiple PDUs with continuous sequence numbers while some SDUs have to be processed with higher priority, PDUs can be sent in an out-of-sequence order.

For example, suppose that SDU1 is encapsulated into PDU1, 2, 3, 4, and 5, SDU2 is encapsulated into PDU6 and SDU2 has a higher priority, e.g. SDU2 includes a message of MBMS access information, then, in order to send SDU2 first, PDU6 should be sent first after sending PDU1 and 2, and thereafter, PDU3, 4, and 5 are sent, which is the so-called sending PDU in an out-of-sequence order.

The methods for information transmission put forward by this invention are applicable not only to MCCH control information, but to all the cases where SDU of different types should be sent in different sending orders as well as to all the cases where SDU information has different priorities.

The foregoing is only the preferred embodiments of this invention. The protection scope thereof, however, is not limited to the above description. Any change or substitution, within the technical scope disclosed by this invention, easily occurring to those skilled in the art should be covered by the protection scope of this invention.

## Claims

1. A method for information transmission, **characterized by**:
interrupting the processing of current SDU information, when receiving another SDU information which comprising a SDU that needs to be processed with higher priority;
processing the SDU that needs to be processed with higher priority, and then processing the SDU of which the processing has been interrupted.

2. The method of Claim 1, wherein the step of interrupting the processing of the current SDU information further comprises: interrupting the segmentation/ concatenation and transmission operations for the current SDUs.

3. The method of Claim 1, wherein the step of interrupting the processing of the current SDU information further comprises: interrupting the transmission operation for the current SDUs, and the Protocol Data Units (PDUs) which are encapsulated from the current SDUs have continuous sequence numbers.

4. The method of Claim 1, wherein the SDUs to be processed are encapsulated into PDUs which with continuous sequence numbers, the method further comprises: sending the PDUs in an out-of-sequence order.

5. The method of any of Claims 1 to 4, wherein the SDU information comprises segments of SDU, or identifier of ending position of SDU, or a combination of the two.

6. The method of any of Claims 1 to 5, wherein SDUs of different types correspond to different priorities, and the need that the SDU should be processed with higher priority depends on the priority thereof.

7. The method of any of Claims 1 to 5, wherein the need that the SDU should be processed with higher priority depends on the features of different types of SDUs, or depends on the sending demand.

8. The method of any of Claims 1 to 7, wherein the SDUs that need to be processed with higher priority comprises one or more than one SDU of the same type, or comprises one or more than one SDU of different types.

9. The method of any of Claims 1 to 8, wherein the step of processing the SDU comprises: segmenting and concatenating the SDUs into one or more than one PDU while the SDU that needs to be processed with higher priority and the SDU that need not be processed with higher priority can not be concatenated into one PDU, and the PDU comprises a Unconfirmed Mode Data Protocol Data Unit (UMD PDU) in a Unconfirmed Mode (UM) mode under the Wideband Code Division Multiple Access (WCDMA)/ Time-Division Synchronization Code Division Multiple Access (TD-SCDMA) RLC protocol.

10. The method of any of Claims 1 to 9, wherein the SDU that needs to be processed with higher priority comprises non-critical info in the MBMS control information; and the SDU of which the processing is interrupted comprises critical info in the MBMS control information.

11. The method of Claim 10, further comprising:
if the SDU information to be sent is non-critical info, segmenting and concatenating the information, sending the information, and terminating the current procedure; if the SDU information to be sent is critical info, performing next step;
segmenting/concatenating, and sending the critical info, monitoring in real time whether there is new non-critical info to be sent, if yes, performing next step;
interrupting the segmentation/concatenation and transmission operations for the critical info, conducting the segmentation/concatenation and transmission operations for the non-critical info before continuing the segmentation/concatenation and transmission operations for the critical info of which the processing has not been completed.

12. The method of Claim 10, further comprising:
if the SDU information to be sent is non-critical info, segmenting/concatenating and sending the information, and terminating the current procedure; if the SDU information to be sent is critical info, performing next step;
segmenting/concatenating, and sending the critical info, monitoring in real time whether there is new non-critical info to be sent, if yes, performing next step; and
completing all the segmentation/concatenation operations for the critical info, saving all the segments of the critical info that have not been sent after receiving the non-critical info, then segmenting/concatenating and sending the non-critical info before eventually sending the saved segments of the critical info.

13. The method of any of Claims 1 to 12, further comprising: encapsulating SDU into PDU according to a preset fixed size.

14. The method of claim 1, the step of interrupting the processing of the current SDU information further comprising:
deciding whether the SDU being processed within the current SDU information needs not to be processed with higher priority, if yes, interrupting the processing of the current SDU information, if not, processing each SDU to be sent in the order of priority.

15. A apparatus for transmitting information, **characterized by**:
means for interrupting the processing of current SDU information, when receiving another SDU information which comprising a SDU that needs to be processed with higher priority;
means for processing the SDU that needs to be processed with higher priority, and then processing the SDU of which the processing has been interrupted.
